# EUROPÄISCHE PATENTSCHRIFT

(11) **EP 4 217 620 B1**
(45) Veröffentlichungstag und Bekanntmachung des Hinweises auf die Patenterteilung: **30.10.2024**
(21) Anmeldenummer: 21778095.6
(22) Anmeldetag: 17.09.2021
(51) Int. Cl.: F16D 3/68

(54) **VERBESSERTE KUPPLUNG FÜR INDUSTRIE-APPLIKATIONEN UND SCHIENENFAHRZEUG**
IMPROVED COUPLING FOR INDUSTRIAL TRUCKS AND RAILWAY VEHICLE
ACCOUPLEMENT AMÉLIORÉ POUR APPLICATIONS INDUSTRIELLES ET VÉHICULE FERROVIAIRE

(30) Priorität: 25.09.2020 EP 20198260
(43) Veröffentlichungstag der Anmeldung: 02.08.2023
(73) Patentinhaber: Flender GmbH, 46395 Bocholt (DE)
(72) Erfinder: KLEINEWEGEN, Stefan, 46395 Bocholt (DE); TE UHLE, Michael, 46414 Rhede (DE)
(74) Vertreter: Michalski Hüttermann & Partner Patentanwälte mbB
(86) Internationale Anmeldenummer: PCT/EP2021/075586
(87) Internationale Veröffentlichungsnummer: WO 2022/063691

(56) Entgegenhaltungen:
- EP-A1- 3 088 757
- EP-A1- 3 088 757
- DE-A1- 102004 009 249
- DE-A1- 102004 009 249
- DE-A1- 102008 017 679
- DE-A1- 102008 017 679
- DE-A1- 102012 007 822
- DE-A1- 102012 007 822
- DE-A1- 2 421 663

## Beschreibung

Die Erfindung betrifft eine Kupplung, die verbesserte Sicherheitseigenschaften aufweist und für der Einsatz in Industrie-Applikationen und Schienenfahrzeuge geeignet ist. Die Erfindung betrifft gleichermaßen eine entsprechende Industrie-Applikation und ein entsprechendes Drehgestell für ein Schienenfahrzeug.

Aus DE 10 2004 009249 A1 ist eine Gelenkwelle bekannt, bei der zwei aufeinander zu weisende Wellenenden von miteinander zu verbindenden Wellen jeweils über eine Klauenkupplung ein Rohr drehfest angekoppelt ist, von denen das eine Rohr in das andere Rohr eingeschoben werden kann. Das jeweilige Rohr weist eine Kupplungsplatte mit in axialer Richtung abstehenden Klauen auf, die über ein elastisches Pufferelement mit den Klauen des zugeordneten Wellenendes zusammenwirken, um die jeweilige Klauenkupplung auszubilden. Von der jeweiligen Kupplungsplatte stehen ineinander einschiebbare Rohrstücke ab, die einen geringeren Außendurchmesser als die Kupplungsplatte und die zugehörigen Klauen aufweisen. Die Klauen der Wellenden und der Rohre sowie die Pufferelemente sind in axialer Richtung zu dem hohlzylindrischen Rohrstück beabstandet positioniert.

Aus DE 10 2012 007822 A1 ist eine Getriebewelle bekannt, bei der zwei aufeinander zu weisende Wellenenden von miteinander zu verbindenden Wellen jeweils über eine Klauenkupplung mit einem zwischengeschalteten Rohr verbunden sind. Die Wellenenden und die jeweiligen axialen Endbereiche des Rohrs weisen zur Ausbildung der jeweiligen Klauenkupplung axial abstehende Klauen auf, zwischen denen ein elastisches Pufferelement vorgesehen ist. Die äußeren Mantelflächen des Rohres, der jeweiligen Klauen und des jeweiligen Pufferelements sind auf einem gemeinsamen Radius angeordnet. Die Klauen der Wellenden und des Rohres sowie die Pufferelemente sind in axialer Richtung zu einem hohlzylindrischen Bereich des Rohrs beabstandet positioniert.

Aus EP 3 088 757 A1 ist eine Klauenkupplung bekannt, bei von einer jeweiligen zu verbindenden Welle axial abstehende Klauen über ein elastisches Pufferelement drehmomentübertragen gekoppelt sind.

Aus DE 10 2008 017679 A1 ist es bekannt ein mit einer Welle über eine radial innere Steckverzahnung koppelbares Innenteil mit einem radial äußeren Außenteil zu verzahnen, wobei in Zahnzwischenräumen zwischen einer Außenverzahnung des Innenteils und einer Innenverzahnung des Außenteils elastische Elemente vorgesehen sind.

Aus der DE 24 21 663 A1 ist eine Kupplung mit den Merkmalen des Oberbegriffs von Anspruch 1 bzw. eine gattungsgemäße Kupplung bekannt.

An Kupplungen werden steigende Anforderungen in puncto Drehmomentübertragung, Ausgleichsfähigkeit und Zuverlässigkeit gestellt. Insbesondere werden gute Notlaufeigenschaften angestrebt. Ebenso wird eine einfache und wirtschaftliche Herstellbarkeit gewünscht. Der Erfindung liegt die Aufgabenstellung zugrunde, eine Kupplung bereitzustellen, die in zumindest einem der beschriebenen Aspekte eine Verbesserung bietet.

Die Lösung der Aufgabe erfolgt durch eine Kupplung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Kupplung, die ein Zwischenstück und zumindest ein Klauenteil umfasst. Das Klauenteil kann eine Mehrzahl an axial abstehenden Klauen aufweisen, durch die Drehmoment auf das Zwischenstück oder vom Zwischenstück auf das Klauenteil übertragbar ist. Im Zwischenstück ist zumindest ein Pufferteil aufgenommen, in dem elastische Dämpfungselemente aufnehmbar sind. Die elastischen Dämpfungselemente sind im bestimmungsgemäßen Betrieb der Kupplung mit den Klauen in Kontakt und nehmen, bezogen auf eine Hauptdrehachse der Kupplung, eine Umfangskraft auf. Erfindungsgemäß umfasst das Zwischenstück neben dem zumindest einen Pufferteil auch ein Rohrstück. Das Rohrstück ist insbesondere im Wesentlichen hohlzylindrisch ausgebildet und dazu ausgelegt, dass durch das zumindest eine Pufferteil geleitete Drehmoment zu übertragen. Das zumindest eine Pufferteil ist erfindungsgemäß in einem, insbesondere hohlzylindrischen, Endbereich des Rohrstücks aufgenommen. Dabei sind die elastischen Dämpfungselemente des zumindest einen Pufferteils im Wesentlichen vom Rohrstück umschlossen. Das heißt in radialer Richtung betrachtet ist das in den Endbereich des Rohrstücks eingesteckte Pufferteil mit seinen Dämpfungselementen über den gesamten Umfangswinkel von 360° von dem Material des Rohrstücks überdeckt. Das Pufferteil, insbesondere das mindestens eine Dämpfungselement, kann zumindest teilweise, insbesondere zu einem Großteil, vorzugsweise vollständig, in einen vom dem Rohrstück in den Endbereich begrenzten Hohlraum, vorzugsweise mit Spiel- oder Press-Passung, eingesteckt sein. Die elastischen Dämpfungselemente des Pufferteils sind somit, bezogen auf die Hauptdrehachse der Kupplung, radial innerhalb einer Wandung des Rohrstücks positioniert. Die elastischen Dämpfungselemente werden so bei der Montage im Wesentlichen umschlossen. Bei einem Versagen der elastischen Dämpfungselemente, beispielsweise ein Abbrechen eines Dämpferelements von dem Pufferteil, wird ein Wegschleudern der Dämpfungselemente verhindert. Die beim Versagen entstehenden Bruchstücke der elastischen Dämpfungselemente werden folglich festgehalten und bieten noch eine verringerte Dämpfungswirkung für einen Notlauf der Kupplung, der durch das Versagen einsetzt. Infolgedessen weist die erfindungsgemäße Kupplung auch bei ungewollten Betriebszuständen verbesserte Notlaufeigenschaften auf, durch die weitergehende Beschädigungen vermieden werden können. Ferner wird das Zwischenstück mit dem Klauenteil in einem sicheren Eingriff gehalten, also ein Wegschleudern des Zwischenstücks, verhindert. Dadurch wird die Betriebssicherheit, beispielweise einer Industrie-Applikation oder eines Drehgestells eines Schienenfahrzeugs, gesteigert. Ebenso wird ein Herausschleudern des Zwischenstücks in einem ungewollten Betriebszustand verhindert.

Insbesondere sind die Klauen des Klauenteils in dem Endbereich des Rohrstücks aufgenommen und zumindest über einen Teil einer axialen Erstreckung, vorzugsweise über die gesamte axiale Erstreckung, der Klauen von dem Endbereich radial au-ßen in Umfangsrichtung umschlossen. Auch die Klauen des Klauenteils können in einen von dem Rohrstück im Endbereich begrenzten Innenraum, vorzugsweise mit Spiel- oder Press-Passung, eingesteckt sein. Dadurch kann das Rohrstück als Berstschutz infolge eines Bauteilversagens abgebrochene Klauen radial innerhalb des Rohrstücks zurückhalten und ein fliehkraftbedingtes Wegschleudern der abgebrochenen Klauen verhindern.

Erfindungsgemäß ist ein von den Dämpfungselementen verschiedener Teil des Pufferteils aus einem im Vergleich zum Rohrstück spröderen Material, insbesondere Grauguss, und das Rohrstück aus Aluminium oder einer Aluminiumlegierung hergestellt. Das Rohrstück kann im Vergleich zu dem den Dämpfungselementen verschiedener Teil des Pufferteils aus einem duktileren Material, beispielsweise Aluminium oder Stahl, hergestellt sein. Das Rohrstück kann durch leicht verwindet werden und eine zusätzliche Drehelastizität bereitstellen, während das Pufferteil im Wesentlichen nicht nachgiebige Tangentialanschläge für die elastischen Dämpfungselemente bereitstellen kann, um ein elastisches Anschlagen der von dem spröden Teil des Pufferteils ausgebildeten Tangentialanschlag an der zugehörigen Klaue des Klauenteils über das dazwischen verpresste elastische Dämpfungselement in einem definierten Drehwinkelbereich zu ermöglichen. Die elastischen Dämpfungselemente sind vorzugsweise mit dem übrigen Pufferelement, insbesondere im Wesentlichen drehfest, befestigt. Alternativ können die elastischen Dämpfungselemente unbefestigt und relativ drehbar in dem übrigen, beispielsweise U-förmigen und/oder taschenförmigen Pufferteil eingesetzt sein, wobei in diesem Fall die elastischen Dämpfungselemente vorzugsweise über einen gemeinsamen Ring einstückig miteinander verbunden sind. Wenn die elastischen Dämpfungselemente mit dem übrigen Pufferelement befestigt, beispielsweise verklebt sind, kann der Ring eingespart werden und die einzelnen Dämpfungselemente zueinander beabstandet separat ausgeführt sein. Wenn bei einer Überbelastung ein Teil des spröden Anteils des Pufferteils, insbesondere ein Tangentialanschlag, und/oder ein, insbesondere bei niedrigen Temperaturen besonders spröde reagierenden, elastisches Dämpfungselement abbricht, kann das duktile Rohrstück die abgebrochenen Teile zurückhalten. Ein Brechen des Rohrstücks kann vermieden werden, da im Extremfall das Rohrstück sich eher plastisch verformen als brechen würde.

In einer Ausführungsform der beanspruchten Kupplung weist das Pufferteil, insbesondere der von den elastischen Dämpfungselementen verschiedene Teil des Pufferteils, in einem Längsschnitt entlang der Hauptdrehachse betrachtet, ein Profil auf, das im Wesentlichen C-förmig oder J-förmig ausgebildet ist. Die elastischen Dämpfungselemente können zusätzlich zu dem Endbereich des Rohrstücks auch von dem übrigen Pufferteil radial außen in Umfangsrichtung umschlossen sein. Ein C-förmiges Profil erlaubt es, die elastischen Dämpfungselemente von drei Seiten zu umschließen und ein Wegschleudern oder Herausfallen von Bruchstücken der Dämpfungselemente zu verhindern. Das c-förmige Profil verleiht dem Pufferteil eine erhöhte Steifigkeit. Das C-förmige Profil ist konstruktiv in einfacher Weise axial verlängerbar, also vertiefbar. Dadurch sind Dämpfungselemente, die erhöhte axiale Abmessung aufweisen, im Zwischenstück aufnehmbar und gleichzeitig die axialen Abmessungen der Kupplung beibehaltbar. Ein C-förmiges Profil für das Pufferteil ist in einfacher Weise herstellbar. Ferner sind derartige Pufferteile kompakt und sind in einfacher Weise unabhängig von anderen Komponenten der Kupplung herstellbar. Die Fertigung der beanspruchten Kupplung wird dadurch flexibler, und somit kosteneffizienter. Alternativ kann das Pufferteil im Längsschnitt betrachtet auch ein im Wesentlichen J-förmiges Profil aufweisen. Bei einem J-förmigen Profil ist eine umlaufende Wandung des Pufferteils in Axialrichtung kürzer als die andere umlaufende Wandung. Dadurch ist in einem radial inneren Bereich des Pufferteils Material einsparbar, was wiederum zu einer Gewichtsersparnis führt.

Das Rohrstück, das zum Zwischenstück gehört, kann in einer Ausführungsform der beanspruchten Kupplung aus Aluminium oder einer Aluminiumlegierung hergestellt sein. Die Verwendung von Aluminium bzw. Aluminiumlegierung erlaubt es, das Rohrstück bei reduziertem oder zumindest gleichbleibendem Gewicht gegenüber Stahl, mit einer erhöhten Wandstärke auszubilden. Ferner weisen Aluminium bzw. Aluminiumlegierungen eine erhöhte Zähigkeit auf. Dies wiederum führt zu einer erhöhten Torsionssteifigkeit des Rohrstücks. Die erhöhte Wandstärke führt auch zu, in absoluten Werten betrachtet, erhöhten Toleranzen, was es wiederum ermöglicht, die Fertigung des Rohrstücks in einfacher Weise durchzuführen. Insgesamt ist so eine beanspruchungsgerechte Auswahl an Werkstoffen für die Kupplung möglich. Alternativ oder ergänzend kann das zumindest eine Pufferteil aus einem Gussmaterial, beispielsweise Grauguss, hergestellt sein. Gussmaterial bietet eine erhöhte Druckfestigkeit, Verschleißbeständigkeit und Wirtschaftlichkeit. Auch dadurch wird das Prinzip der beanspruchungsgerechten Werkstoffauswahl weiter verwirklicht.

In einer weiteren Ausführungsform der beanspruchten Kupplung sind an beiden Endbereichen des Rohrstücks jeweils ein Pufferteil und ein Klauenteil angeordnet. Das Zwischenstück wird folglich beidseitig stabil gelagert. Bei einem Versagen eines oder mehrerer elastischer Dämpfungselemente ist sichergestellt, dass am entgegengesetzten Endbereich eine ausreichend ausgleichsfähige Kupplungsanordnung ausgebildet ist. Insbesondere wird verhindert, dass bei einem Versagen eines elastischen Dämpfungselements das Zwischenstück soweit ausgelenkt wird, dass dieses aus der Kupplung gelöst wird. Infolgedessen ist die beanspruchte Kupplung robust und zuverlässig.

Darüber hinaus kann das zumindest eine Pufferteil mit dem Rohrstück über eine Klebeverbindung verbunden sein. Die Klebeverbindung kann dabei an einer umlaufenden Außenfläche des Pufferteils ausgebildet sein, die im montierten Zustand im Wesentlichen an einer Innenwand des Rohrstücks anliegt. Je höher die axialen Abmessungen des zumindest einen Pufferteils sind, umso größer, und damit belastbarer, ist die Klebefläche, die mit dem Rohrstück ausbildbar ist. Eine Klebeverbindung erlaubt es, zwischen dem Pufferteil und dem Rohrstück eine Spielpassung auszubilden. Die Spielpassung kann dabei mit erhöhten Toleranzen gefertigt werden, da der so vorgegebene Klebespalt im montierten Zustand ohnehin mit Klebstoff gefüllt ist. Des Weiteren erfordern weder das Pufferteil noch das Rohrstück im Bereich der Klebverbindung eine aufwendig überarbeitete glatte Oberfläche. Vielmehr ist im Bereich der Klebverbindung bei der Herstellung eine raue Oberfläche beibehaltbar, die aufgrund ihrer Rauigkeit eine gesteigerte Klebwirkung bietet. Dementsprechend ist die beanspruchte Kupplung kosteneffizient herstellbar.

Des Weiteren kann durch das zumindest eine Pufferteil und das zugehörige Klauenteil ein Kupplungsgelenk ausgebildet sein. Das Kupplungsgelenk erlaubt es, zwischen dem Zwischenstück und dem entsprechenden Klauenteil einen Versatz auszugleichen. Der Versatz kann als Axialversatz, Winkelversatz, oder einer Kombination hieraus ausgebildet sein. Dazu sind die Klauen, das Pufferteil und/oder die elastischen Dämpfungselemente mit entsprechenden Spielräumen ausgebildet, die für den jeweiligen Versatz hinreichend Platz bieten. Bei Ausführungsformen, bei denen das Zwischenstück beidseitig mit derartigen Pufferteilen versehen ist, in die Klauenteile eingreifen, wird so eine Doppelgelenkkupplung verwirklicht. Aufgrund der zwei Gelenkebenen, also Kupplungsgelenke, wird so der für einen Versatz notwendige Ausgleich zwischen zwei Klauenteilen aufgeteilt. Die beiden Kupplungsgelenke werden selbsttätig jeweils beide nur um ein Minimum ausgelenkt. Infolgedessen wird der Verschleiß an der Kupplung durch den Versatz nur geringfügig gesteigert. Demensprechend bietet die beanspruchte Kupplung eine erhöhte Lebensdauer und Zuverlässigkeit.

Ferner kann zumindest eines der im Pufferteil angeordneten elastischen Dämpfungselemente durch Additive Fertigung hergestellt sein. Elastomere, die gute Dämpfungseigenschaften aufweisen, können in hinreichender Genauigkeit mittels Additiver Fertigung hergestellt werden und sind in einfacher Weise konstruktiv anpassbar. Ebenso können per Additiver Fertigung hergestellte elastische Dämpfungselemente mit Sensoren versehen sein. Die Sensoren können an einer Außenseite der elastischen Dämpfungselemente und/oder in ihrem Inneren ausgebildet sein. Die Sensoren können jeweils als Temperatursensoren, Drucksensoren, oder Verschleißsensoren ausgebildet sein. Hierdurch wird eine platzsparende gesteigerte Funktionsintegration erzielt. Alternativ oder ergänzend kann zumindest eines der elastischen Dämpfungselemente aus einem elektrisch isolierenden Werkstoff hergestellt sein. Dadurch ist in einfacher Weise eine elektrische Isolierung zwischen einem Klauenteil und dem Zwischenstück herstellbar.

In einer weiteren Ausführungsform der beanspruchten Kupplung kann zumindest eines der elastischen Dämpfungselemente separat montierbar und demontierbar ausgebildet sein. Beispielsweise können die elastischen Dämpfungselemente kraftschlüssig in das Pufferteil einsteckbar sein. Dazu kann das jeweilige elastische Dämpfungselement im Wesentlichen H-förmig oder kreuzförmig ausgebildet sein. Die elastischen Dämpfungselemente sind so entsprechend ihrem Verschleißzustand gezielt austauschbar. Der Wartungsaufwand, insbesondere ein Ersatzteilbedarf für die beanspruchte Kupplung, ist dadurch reduzierbar.

Die beanspruchte Kupplung kann am zumindest einen Pufferteil einen Kragen aufweisen, der als axialer Anschlag dient. Insbesondere ist der Kragen aus einem elektrisch isolierenden Material, beispielsweise Kunststoff, zur Unterbrechung eines Kriechstromflusses zwischen dem Klauenteil und dem Pufferteil hergestellt. Der Kragen stellt im Wesentlichen einen Bereich mit einem erhöhten Außendurchmesser dar, der nicht im Rohrstück aufnehmbar ist. Bei einer Montage des Pufferteils im Rohrstück wird dessen axiale Position durch den Kragen begrenzt. Zwischen einer Stirnseite des Rohrstücks und dem Kragen ist eine Klebeverbindung ausbildbar, die zusätzlich das Pufferteil gegen Verdrehen abstützt. Der Kragen kann umlaufend ausgebildet sein oder segmentweise unterbrochen. Der Kragen ist durch eine Bearbeitung auf einer Drehbank herstellbar und kann dementsprechend präzise ausgerichtet sein. Das Rohrstück und das Pufferteil können folglich ein einfacher Weise präzise zueinander ausgerichtet werden. Eine schiefstehende Ausrichtung des Pufferteils, die gesteigerten Verschleiß wie ein Versatz zwischen dem Pufferteil und dem entsprechenden Kupplungsteil hervorruft, wird so vermieden. Ein umlaufender Kragen bildet mit dem Rohrstück einen umlaufenden Spalt, an den eine Klebeverbindung ausbildbar ist, die eine zusätzliche Sicherung gegen Verdrehen des Pufferteils bietet. Ein segmentweise unterbrochener Kragen bietet eine weitere Gewichtsersparnis. Zudem kann in einer Einbausituation, in der eine das Klauenteil kontaktierende Welle einem Kriechstrom ausgesetzt ist, eine elektrische Weiterleitung des Kriechstroms an das über das Zwischenstück angebundene andere Klauenteil unterbrochen werden. Die Kupplung kann dadurch auch in elektrisch belasteten Umgebungen verwendet werden.

Darüber hinaus kann am zumindest einen Pufferteil ein Deckel angeordnet sein. Insbesondere ist der Deckel aus einem elektrisch isolierenden Material, beispielsweise Kunststoff, zur Unterbrechung eines Kriechstromflusses zwischen einer in dem Klauenteil aufgenommenen Welle und dem Pufferteil hergestellt. Durch den Deckel wird ein Eintritt von Staub, Flüssigkeit oder Dämpfen in das Innere des Zwischenstücks verhindert. Insbesondere wird der Eintritt von Flüssigkeiten oder Dämpfen verhindert, die eine Klebverbindung zwischen dem zumindest einen Pufferteil und dem Rohrstück angreift. Die Lebensdauer des Zwischenstücks, und somit der Kupplung, wird dadurch erhöht. Durch diesen Schutz wird die Verwendung einer Klebverbindung im Zwischenstück technisch praktikabel, und somit deren technische Vorzüge nutzbar. Ferner kann ein solcher Deckel axial vorstehen und so als ein Anschlag für eine Welle und/oder ein Klauenteil dienen. Hierdurch wird eine Geräuschentkopplung zwischen dem Zwischenstück und der Welle bzw. dem Klauenteil erreicht und damit Geräuschentwicklung im Betrieb vermindert. Zudem kann in einer Einbausituation, in der eine in dem Klauenteil aufgenommene Welle einem Kriechstrom ausgesetzt ist, eine elektrische Weiterleitung des Kriechstroms an das über das Zwischenstück angebundene andere Klauenteil unterbrochen werden. Die Kupplung kann dadurch auch in elektrisch belasteten Umgebungen verwendet werden.

Die zugrundeliegende Aufgabenstellung wird auch durch eine erfindungsgemäße Industrie-Applikation gelöst. Die Industrie-Applikation umfasst eine Antriebseinheit, durch die eine Antriebsleistung bereitgestellt wird. Die Antriebseinheit kann als Elektromotor, Verbrennungsmotor, Hydraulikmotor, Turbinenrad oder Schwungrad ausgebildet sein. Die Antriebsleistung ist über eine Kupplung mit einer Abtriebseinheit verbunden, die eine mechanische Anwendung ist, durch die die Funktion der Industrie-Applikation bestimmt ist. Die Industrie-Applikation kann insgesamt als Mühle, Wälzmühle, Zementmühle, Zuckermühle, Extruder, Förderanlage, Gesteinsbrecher, Walzenbrecher, Rührwerk, Rührzerkleinerer, Drehrohrofen, Walzenpresse, Rollpresse, Pumpe, Ventilator, Hebevorrichtung, Schrottpresse oder Müllpresse ausgebildet sein. Die Kupplung ist dabei erfindungsgemäß nach einer der oben skizzierten Ausführungsformen ausgebildet.

Ebenso wird die eingangs beschriebene Aufgabe durch ein Drehgestell für ein Schienenfahrzeug gelöst, das einen Fahrmotor umfasst, der mit einem Rad drehmomentübertragend verbunden ist. Zwischen dem Rad und dem Fahrmotor kann ferner ein Getriebe angeordnet sein. Erfindungsgemäß weist das Drehgestell eine Kupplung auf, über die der Fahrmotor mit dem Rad verbunden ist. Die Kupplung ist dabei gemäß einer der oben dargestellten Ausführungsformen ausgebildet.

Offenbart und nicht Gegenstand der Erfindung ist ein Computerprogrammprodukt, das zur Simulation eines Betriebsverhaltes einer Kupplung ausgebildet ist, die in einer Industrie-Applikation oder einem Schienenfahrzeug eingesetzt wird. Unter dem Betriebsverhalten ist beispielweise ein Auslenkverhalten oder Verschleißverhalten einzelner Komponenten zu verstehen. Auch eine Kinematik und/oder eine Schwingungscharakteristik der Kupplung können mittels des offenbarten Computerprogrammprodukts simuliert werden. Das Betriebsverhalten der Kupplung ist dadurch in einem montierten Zustand in der Industrie-Applikation oder dem Schienenfahrzeug simulierbar. Dies kann sowohl einen Produktivbetrieb als auch einen Wartungsbetrieb umfassen. Die Kupplung ist dementsprechend in ihrem physikalischen Verhalten im offenbarten Computerprogrammprodukt abgebildet und kann mit einer Datenschnittstelle versehen sein, durch die weitere simulationsgerichtete Computerprogrammprodukte Eingabewerte an das offenbarte Computerprogrammprodukt weitergeben können. Gleichermaßen kann das offenbarte Computerprogrammprodukt auch mit einer Datenschnittstelle zu einem Weitergeben von Ausgabewerten des offenbarten Computerprogrammprodukts an weitere simulationsgerichtete Computerprogrammprodukte versehen sein. Das offenbarte Computerprogrammprodukt kann als sogenannter Digitaler Zwilling ausgebildet sein. Derartige Digitalen Zwillinge sind beispielsweise in der Offenlegungsschrift US 2017/286572 A1 dargestellt. Der Offenbarungsgehalt von US 2017/286572 A1 wird durch Verweisung in die vorliegende Anmeldung mit einbezogen. Offenbart ist, dass die Kupplung, die durch das offenbarte Computerprogrammprodukt simulierbar ist, gemäß einer der oben skizzierten Ausführungsformen ausgebildet.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Kupplung in einer Schnittdarstellung;
- FIG 2: einen Aufbau einer Ausführungsform eines beanspruchten Drehgestells;
- FIG 3: einen Aufbau einer Ausführungsform einer beanspruchten Industrie-Applikation.

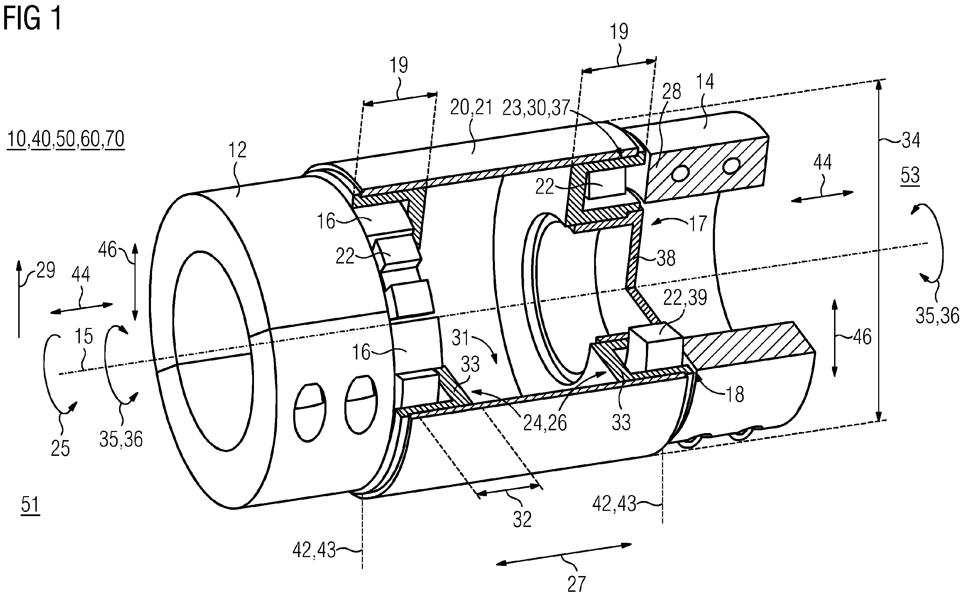

Eine Schnittdarstellung einer ersten Ausführungsform einer beanspruchten Kupplung 10 ist in FIG 1 abgebildet. Die Kupplung 10 umfasst ein erstes Kupplungsteil 12 und ein zweites Kupplungsteil 14, die mit einem Zwischenstück 20 verbunden sind. Die Klauenteile 12, 14 weisen jeweils eine Mehrzahl an Klauen 16 auf, die in das Zwischenstück 20 eingreifen. Eine Drehung des ersten Klauenteils 12 um eine Hauptdrehachse 15 der Kupplung 10 wird Drehmoment 25 auf das Zwischenstück 20, und von dort auf das zweite Kupplungsteil 14 übertragen. Das Drehmoment 25 wird durch eine nicht näher dargestellte erste Leistungswelle 51 zugeführt und über eine nicht näher gezeigte zweite Leistungswelle 53 abgeführt. Das Zwischenstück 20 umfasst ein Rohrstück 21, das in seinen Endbereichen 19 jeweils mit einem Pufferteil 24 versehen ist. Zumindest eines der Pufferteile 24 ist aus einem Gussmaterial, insbesondere Grauguss, hergestellt. Das Rohrstück 21 ist aus Aluminium oder einer Aluminiumlegierung hergestellt und weist einen Außendurchmesser auf, der den größten Außendurchmesser 34 der Kupplung 10 definiert.

Die Pufferteile 24 in den Endbereichen 19 des Rohrstücks 21 weisen im Längsschnitt betrachtet ein im Wesentlichen C-förmiges Profil 26 auf. Jeweils eine Außenfläche 23 der Pufferteile 24 liegt an einer Innenwand 31 des Rohrstücks 21 an und ist mit dem Rohrstück 21 über eine Klebverbindung 30 verbunden. Das Rohrstück 21 und die Pufferteile 24 sind jeweils derart ausgebildet, dass zwischen diesen in einem unverklebten Zustand ein Klebspalt 37 ausgebildet ist. Im Bereich des Klebspalts 37 weisen die Außenfläche 23 des Pufferteils 24 und das Rohrstück 21 eine erhöhte Rauigkeit auf, um so die Beanspruchbarkeit des Klebespalts 37 zu steigern. Eine Klebespaltlänge 32 zwischen dem jeweiligen Pufferteil 24 und dem Rohrstück 21 ist durch eine Abmessung des entsprechenden Pufferteils 24 in Axialrichtung 27 definiert. Je höher die Klebespaltlänge 32 ist, umso höher ist die mechanische Beanspruchbarkeit der Klebeverbindung 30. Die Pufferteile 24 weisen ferner jeweils einen Kragen 28 auf, der einen Anschlag ausbildet und so die Position der Pufferteile 24 im Rohrstück 21 in Axialrichtung 27 begrenzt. Durch die Krägen 28 wird jeweils eine räumliche Ausrichtung der Pufferteile 24 gewährleistet. In den Pufferteile 24 ist jeweils eine Mehrzahl an elastischen Dämpfungselementen 22 angeordnet, die im bestimmungsgemäßen Betrieb der Kupplung 10 Tangentialkräfte 17 auf die Klauen 16 ausüben oder auf die durch die Klauen 16 Tangentialkräfte 17 ausgeübt werden. Die elastischen Dämpfungselemente 22 sind über Haltevorsprünge 33 kraftschlüssig und/oder formschlüssig am jeweiligen Pufferteil 24 befestigt. Über die Tangentialkräfte 17 werden im jeweiligen Pufferteil 24 Druckbeanspruchungen hervorgerufen. Zumindest eines der elastischen Dämpfungselemente 22 ist mittels Additiver Fertigung hergestellt und mit einem nicht näher dargestellten Sensor 39 ausgestattet. Der Sensor 39 ist dabei im Inneren des elastischen Dämpfungselements 22 positioniert.

Die elastischen Dämpfungselemente 22 sind von drei Seiten vom jeweiligen Pufferteil 24 umschlossen. Dadurch sind die elastischen Dämpfungselemente 22 jeweils separat montierbar und demontierbar. Auf einer dem Rohrstück 21 abgewandten Seite des jeweiligen Pufferteils 24, also dessen offener Seite, ist jeweils ein Klauenteil angeordnet. Dadurch sind die elastischen Dämpfungselemente 22 im Wesentlichen eingeschlossen. Bei einem Versagen eines elastischen Dämpfungselements 22 zerfällt dieses in Bruchstücke, die dadurch, dass sie eingeschlossen sind, immer noch einen Notlaufbetrieb der Kupplung 10 ermöglichen. Die Pufferteile 24, die Klauen 16 und die elastischen Dämpfungselemente 24 sind derart dimensioniert, dass zwischen dem ersten bzw. zweiten Klauenteil 12, 14 und dem Zwischenstück 20 ein Spalt 18 vorliegt, der umlaufend ausgebildet ist. Daraus ergibt sich am ersten und zweiten Klauenteil 12, 14 eine Gelenkebene 42 gegenüber dem Zwischenstück 20. Jede der Gelenkebenen 42 entspricht einem Gelenk 43 erlaubt es, einen Winkelversatz 36 auszugleichen, der durch eine Kippbewegung 35 hergerufen wird. Ferner ist zwischen dem Zwischenstück 20 und dem ersten bzw. zweiten Klauenteil 12, 14 auch ein Axialversatz 44 und/oder Radialversatz 56 ausgleichbar. Die Kupplung 10 stellt dadurch eine Doppelgelenckupplung 40 dar. Offenbart ist, dass die Kupplung 10 ferner in einem Computerprogrammprodukt 70 abgebildet ist, das dazu ausgebildet ist, das Betriebsverhalten der Kupplung 10 zu simulieren, beispielsweise in einer Industrie-Applikation 50 oder einem Schienenfahrzeug 60.

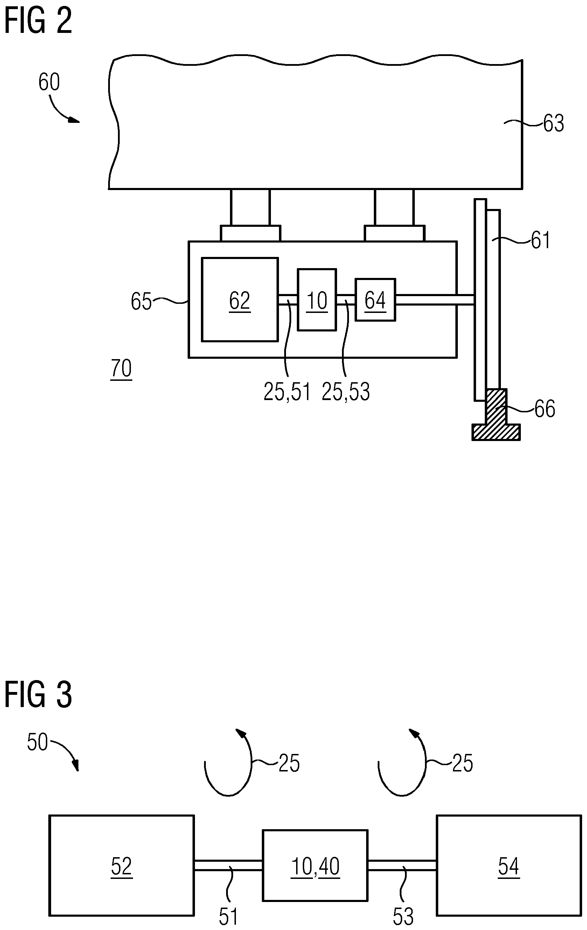

FIG 2 zeigt einen schematischen Aufbau einer Ausführungsform eines beanspruchten Drehgestells 65, das in einem Schienenfahrzeug 60 eingesetzt wird. Das Schienenfahrzeug 60 umfasst einen Wagenkasten 63, an dem das Drehgestell 65 befestigt ist. Das Drehgestellt 65 umfasst einen Fahrmotor 62, der über eine Kupplung 10 mit einem Getriebe 64 verbunden ist, um ein Rad 61 anzutreiben, dass auf einer Schiene 66 rollt. Dazu ist die Kupplung 10 mit einer ersten Leistungswelle 51 wird der Kupplung 10 Drehmoment 25 zugeführt und über eine zweite Leistungswelle 53 wird das Drehmoment 25 abgeführt. Die Kupplung 10 ist gemäß einer der oben skizzierten Ausführungsformen ausgebildet, beispielsweise gemäß der Doppelgelenkkupplung 40 nach FIG 1. Offenbart ist, dass die Kupplung 10 dabei in einem Computerprogrammprodukt 70 abgebildet ist, mit dem das Betriebsverhalten der Kupplung 10 im Betrieb des Drehgestells 65, und damit des Schienenfahrzeugs 60, simulierbar ist.

In FIG 3 ist schematisch ein Aufbau einer Ausführungsform einer beanspruchten Industrie-Applikation 50 dargestellt. Die Industrie-Applikation 50 umfasst eine Antriebseinheit 52, die als Elektromotor, Verbrennungsmotor, Hydraulikmotor, Turbinenrad oder Schwungrad ausgebildet sein kann. Durch die Antriebseinheit 52 wird Drehmoment 25 zur Verfügung gestellt, das über eine erste Leistungswelle 51 einer Kupplung 10 zugeführt wird. Das Drehmoment 25 wird von der Kupplung 10 über eine zweite Leistungswelle 53 an eine Abtriebseinheit 54 weitergeleitet. Die Abtriebseinheit 54 ist eine mechanische Anwendung, durch die die Funktion der Industrie-Applikation 50 bestimmt ist. Die Industrie-Applikation 50 kann insgesamt als Mühle, Wälzmühle, Zementmühle, Zuckermühle, Extruder, Förderanlage, Gesteinsbrecher, Walzenbrecher, Rührwerk, Rührzerkleinerer, Drehrohrofen, Walzenpresse, Rollpresse, Pumpe, Ventilator, Hebevorrichtung, Schrottpresse oder Müllpresse ausgebildet sein. Dabei ist die Kupplung 10 nach einer der oben skizzierten Ausführungsformen ausgebildet, beispielsweise als Doppelgelenkkupplung 40 gemäß FIG 1.

## Patentansprüche

1. Kupplung (10), umfassend zumindest ein Klauenteil (12, 14) und ein Zwischenstück (20), das ein elastische Dämpfungselemente (22) aufweisendes Pufferteil (24) zur Aufnahme des zumindest einen Klauenteils (12,14) aufweist, wobei das zumindest eine Pufferteil (24) in einem Endbereich (19) eines Rohrstücks (21) des Zwischenstücks (20) aufgenommen ist und die Dämpfungselemente (22) von dem Endbereich (19) radial au-ßen in Umfangsrichtung umschlossen sind, **dadurch ge kennzeichnet** , dass ein von den Dämpfungselementen (22) verschiedener Teil des Pufferteils (24) aus einem im Vergleich zum Rohrstück (21) spröderen Material und das Rohrstück (21) aus Aluminium oder einer Aluminiumlegierung hergestellt ist.

2. Kupplung (10) nach Anspruch 1, **dadurch ge**- **kennzeichnet**, dass das Klauenteil (12, 14) axial abstehende Klauen (16) aufweist, wobei die Klauen (16) in dem Endbereich (19) aufgenommen und zumindest über einen Teil einer axialen Erstreckung, vorzugsweise über die gesamte axiale Erstreckung, der Klauen (16) von dem Endbereich (19) radial außen in Umfangsrichtung umschlossen sind.

3. Kupplung (10) nach Anspruch 1 oder 2, **dadurch gekennzeichnet , dass** der von den Dämpfungselementen (22) verschiedene Teil des Pufferteils (24) aus Grauguss hergestellt ist.

4. Kupplung (10) nach einem der Ansprüche 1 bis 3, **dadurch gekennzeichnet , dass** das zumindest eine Pufferteil (24) im Längsschnitt ein C-förmiges oder J-förmiges Profil (26) aufweist.

5. Kupplung (10) nach einem der Ansprüche 1 bis 4, **dadurch gekennzeichnet , dass** an beiden Endbereichen (19) des Rohrstücks (21) jeweils ein Pufferteil (24) und ein Klauenteil (12, 14) angeordnet sind.

6. Kupplung (10) nach einem der Ansprüche 1 bis 5, **dadurch gekennzeichnet , dass** das zumindest eine Pufferteil (24) mit dem Rohrstück (21) über eine Klebeverbindung (30) verbunden ist.

7. Kupplung (10) nach einem der Ansprüche 1 bis 6, **dadurch gekennzeichnet, dass** durch das zumindest eine Pufferteil (24) und das zugehörige Klauenteil (12, 14) ein Kupplungsgelenk (43) ausgebildet ist.

8. Kupplung (10) nach einem der Ansprüche 1 bis 7, **dadurch gekennzeichnet, dass** zumindest eines der im Pufferteil (24) angeordneten elastischen Dämpfungselemente (22) mittels Additiver Fertigung hergestellt ist.

9. Kupplung (10) nach Anspruch 8, **dadurch gekennzeichnet, dass** das die elastischen Dämpfungselement (22) separat montierbar und demontierbar sind.

10. Kupplung (10) nach einem der Ansprüche 1 bis 9, **dadurch gekennzeichnet, dass** am zumindest einen Pufferteil (24) ein umlaufender Kragen (28) als axialer Anschlag ausgebildet ist, wobei der Kragen (28) aus einem elektrisch isolierenden Material zur Unterbrechung eines Kriechstromflusses zwischen dem Klauenteil (12, 14) und dem Pufferteil (24) hergestellt ist.

11. Kupplung (10) nach einem der Ansprüche 1 bis 10, **dadurch gekennzeichnet, dass** am zumindest einen Pufferteil (24) ein Deckel (38) angeordnet ist, wobei der Deckel (38) aus einem elektrisch isolierenden Material zur Unterbrechung eines Kriechstromflusses zwischen einer in dem Klauenteil (12, 14) aufgenommenen Welle und dem Pufferteil (24) hergestellt ist.

12. Industrie-Applikation (50), umfassend eine Antriebseinheit (52) und eine Abtriebseinheit (54), die drehmomentübertragend mit einer Kupplung (10) verbunden sind, **dadurch gekennzeichnet , dass** die Kupplung (10) nach einem der Ansprüche 1 bis 11 ausgebildet ist.

13. Drehgestell (65) für ein Schienenfahrzeug (60), umfassend einen Fahrmotor (62) und ein Rad (61), die über eine Kupplung (10) drehmomentübertragend miteinander verbunden sind, **dadurch gekennzeichnet, dass** die Kupplung (10) nach einem der Ansprüche 1 bis 11 ausgebildet ist.

## Claims

1. Coupling (10) comprising at least one claw part (12, 14) and an intermediate piece (20), said intermediate piece having a buffer part (24) which has elastic damping elements (22) and serves for receiving the at least one claw part (12, 14), wherein the at least one buffer part (24) is received in an end region (19) of a tube piece (21) of the intermediate piece (20), and the damping elements (22) are surrounded by the end region (19) radially at the outside in a circumferential direction, **characterized in that** a part of the buffer part (24) that is different from the damping elements (22) is produced from a material which is more brittle in comparison with the tube piece (21), and the tube piece (21) is produced from aluminium or from an aluminium alloy.

2. Coupling (10) according to Claim 1, **characterized in that** the claw part (12, 14) has axially protruding claws (16), wherein the claws (16) are received in the end region (19) and, at least over a part of an axial extent, preferably over the entire axial extent, of the claws (16), are surrounded by the end region (19) radially at the outside in a circumferential direction.

3. Coupling (10) according to Claim 1 or 2, **characterized in that** the part of the buffer part (24) different from the damping elements (22) is produced from grey cast iron.

4. Coupling (10) according to one of Claims 1 to 3, **characterized in that** the at least one buffer part (24) has a C-shaped or J-shaped profile (26) in longitudinal section.

5. Coupling (10) according to one of Claims 1 to 4, **characterized in that** a buffer part (24) and a claw part (12, 14) are arranged at each of the two end regions (19) of the tube piece (21).

6. Coupling (10) according to one of Claims 1 to 5, **characterized in that** the at least one buffer part (24) is connected to the tube piece (21) via an adhesive-bonding connection (30).

7. Coupling (10) according to one of Claims 1 to 6, **characterized in that** a coupling joint (43) is formed by the at least one buffer part (24) and the associated claw part (12, 14).

8. Coupling (10) according to one of Claims 1 to 7, **characterized in that** at least one of the elastic damping elements (22) arranged in the buffer part (24) is produced by means of additive manufacturing.

9. Coupling (10) according to Claim 8, **characterized in that** the elastic damping elements (22) are separately mountable and dismountable.

10. Coupling (10) according to one of Claims 1 to 9, **characterized in that** an encircling collar (28) is formed as an axial stop on the at least one buffer part (24), wherein the collar (28) is produced from an electrically insulating material for interrupting a creepage current flow between the claw part (12, 14) and the buffer part (24) .

11. Coupling (10) according to one of Claims 1 to 10, **characterized in that** a cover (38) is arranged on the at least one buffer part (24), wherein the cover (38) is produced from an electrically insulating material for interrupting a creepage current flow between a shaft received in the claw part (12, 14) and the buffer part (24) .

12. Industrial application (50) comprising a drive unit (52) and an output unit (54) which are connected in a torque-transmitting manner to a coupling (10), **characterized in that** the coupling (10) is designed according to one of Claims 1 to 11.

13. Bogie (65) for a rail vehicle (60), comprising a traction motor (62) and a wheel (61) which are connected to one another in a torque-transmitting manner via a coupling (10), **characterized in that** the coupling (10) is designed according to one of Claims 1 to 11.

## Revendications

1. Accouplement (10), comprenant au moins une partie à griffes (12, 14) et une pièce intermédiaire (20), qui présente une partie tampon (24) présentant des éléments amortisseurs élastiques (22) pour recevoir l'au moins une partie à griffes (12, 14), l'au moins une partie tampon (24) étant reçue dans une zone d'extrémité (19) d'une pièce tubulaire (21) de la pièce intermédiaire (20) et les éléments amortisseurs (22) étant entourés par la zone d'extrémité (19) radialement vers l'extérieur dans la direction circonférentielle, **caractérisé en ce qu'**une partie de la partie tampon (24) autre que les éléments amortisseurs (22) est fabriquée en un matériau plus fragile que celui de la pièce tubulaire (21) et la pièce tubulaire (21) est fabriquée en aluminium ou en alliage d'aluminium.

2. Accouplement (10) selon la revendication 1, **caractérisé en ce que** la partie à griffes (12, 14) présente des griffes (16) faisant saillie axialement, les griffes (16) étant reçues dans la zone d'extrémité (19) et étant entourées radialement vers l'extérieur dans la direction circonférentielle par la zone d'extrémité (19) sur au moins une partie de l'étendue axiale, de préférence sur toute l'étendue axiale, des griffes (16).

3. Accouplement (10) selon la revendication 1 ou 2, **caractérisé en ce que** la partie de la pièce tampon (24) autre que les éléments amortisseurs (22) est fabriquée en fonte grise.

4. Accouplement (10) selon l'une quelconque des revendications 1 à 3, **caractérisé en ce que** l'au moins une partie tampon (24) présente, en coupe longitudinale, un profil en forme de C ou en forme de J (26).

5. Accouplement (10) selon l'une quelconque des revendications 1 à 4, **caractérisé en ce qu'**une partie tampon (24) et une partie à griffes (12, 14) sont agencées respectivement aux deux zones d'extrémité (19) de la pièce tubulaire (21).

6. Accouplement (10) selon l'une quelconque des revendications 1 à 5, **caractérisé en ce que** l'au moins une partie tampon (24) est reliée à la pièce tubulaire (21) par le biais d'une liaison adhésive (30).

7. Accouplement (10) selon l'une quelconque des revendications 1 à 6, **caractérisé en ce qu'**une articulation d'accouplement (43) est formée par l'au moins une partie tampon (24) et la partie à griffes (12, 14) correspondante.

8. Accouplement (10) selon l'une quelconque des revendications 1 à 7, **caractérisé en ce qu'**au moins l'un des éléments amortisseurs élastiques (22) agencés dans la partie tampon (24) est fabriqué par fabrication additive.

9. Accouplement (10) selon la revendication 8, **caractérisé en ce que** les éléments amortisseurs élastiques (22) peuvent être montés et démontés séparément.

10. Accouplement (10) selon l'une quelconque des revendications 1 à 9, **caractérisé en ce qu'**un collet périphérique (28) est formé sur l'au moins une partie tampon (24) en tant que butée axiale, le collet (28) étant fabriqué en un matériau électriquement isolant pour interrompre un flux de courant de fuite entre la partie à griffes (12, 14) et la partie tampon (24).

11. Accouplement (10) selon l'une quelconque des revendications 1 à 10, **caractérisé en ce qu'**un couvercle (38) est agencé sur au moins une partie tampon (24), le couvercle (38) étant fabriqué en un matériau électriquement isolant pour interrompre un flux de courant de fuite entre un arbre reçu dans la partie à griffes (12, 14) et la partie tampon (24).

12. Application industrielle (50), comprenant une unité d'entraînement (52) et une unité de sortie (54) reliées à un accouplement (10) de manière à transmettre un couple, **caractérisée en ce que** l'accouplement (10) est configuré selon l'une quelconque des revendications 1 à 11.

13. Bogie (65) pour un véhicule ferroviaire (60), comprenant un moteur de traction (62) et une roue (61), qui sont reliés l'un à l'autre par l'intermédiaire d'un accouplement (10) de manière à transmettre un couple, **caractérisé en ce que** l'accouplement (10) est configuré selon l'une quelconque des revendications 1 à 11.
